(19) Europäisches Patentamt
European Patent Office
Office européen des brevets

(11) Veröffentlichungsnummer: **0 202 594 B1**

# (12) EUROPÄISCHE PATENTSCHRIFT

(45) Veröffentlichungstag der Patentschrift: **05.08.92**

(51) Int. Cl.5: **C08J 7/12**, C08G 77/38, G02B 1/04

(21) Anmeldenummer: **86106544.9**

(22) Anmeldetag: **14.05.86**

## (54) Hydrophiler Siliconkautschukkörper und Verfahren zu seiner Herstellung.

(30) Priorität: **15.05.85 DE 3517615**

(43) Veröffentlichungstag der Anmeldung:
**26.11.86 Patentblatt 86/48**

(45) Bekanntmachung des Hinweises auf die Patenterteilung:
**05.08.92 Patentblatt 92/32**

(84) Benannte Vertragsstaaten:
**CH DE FR GB IT LI SE**

(56) Entgegenhaltungen:
**EP-A- 0 033 754**
**FR-A- 2 208 775**
**US-A- 4 332 922**

(73) Patentinhaber: **CIBA-GEIGY AG**
**Klybeckstrasse 141**
**CH-4002 Basel(CH)**

(72) Erfinder: **Schäfer, Horst, Dr. rer. nat.**
**Wiesenau 2**
**W-8750 Aschaffenburg-Obernau(DE)**
Erfinder: **Kossmehl, Gerhard, Prof. Dr. rer. nat.**
**Grabenstrasse 38F**
**W-1000 Berlin 45(DE)**
Erfinder: **Neumann, Walter, Dr. rer. nat.**
**Schlehenweg 20**
**W-7923 Königsbronn(DE)**
Erfinder: **Fluthwedel, Andrea, Dipl.-Chem.**
**Nordhauserstrasse 39**
**W-1000 Berlin 10(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Polysiloxane, insbesondere Siliconkautschuk finden auf den verschiedensten Gebieten der Technik und Medizin Verwendung. Siliconkautschuk besitzt eine hohe Sauerstoffdurchlässigkeit, wodurch dieses Material sich auch für die Herstellung von Kontaktlinsen eignen würde. Jedoch ist Siliconkautschuk ein hydrophobes Material, weshalb bislang der Einsatz dieses Materials als Kontaktlinsenmaterial Schwierigkeiten bereitet hat. Zur Hydrophilierung dieses Materials sind verschiedene Verfahren bekannt (EP 33 754, DE-OS 30 04 685, US-PS 41 43 949 und 39 25 178, franz.Offenlegungsschrift 24 07 232, deutsche Auslegeschrift 23 53 495).

Aus der DE-OS 30 04 685 ist bereits ein Verfahren zur Hydrophilierung von Kontaktlinsen aus Siliconkautschuk bekannt, bei dem die Siliconkautschukoberfläche mit einer hydrophilen Oberflächenschicht versehen wird. Bei diesem Verfahren werden zwei Verfahrensschritte zur Anwendung gebracht, wobei in einem ersten Verfahrensschritt der Siliconkautschuk mit einem oligomeren SiH-Gruppen enthaltenden Siloxan in Gegenwart eines Katalysators umgesetzt wird (Äquilibrierungsreaktion) und in einem zweiten Verfahrensschritt der äquilibrierte Siliconkautschuk entweder einer Reaktion mit einer wäßrigen Base oder einer Silan-Additionsreaktion mit C = C-Doppelbindungen enthaltenden Verbindungen unterworfen wird. Hierbei wird ein Siliconkautschuk gewonnen mit guter Sauerstoffdurchlässigkeit, der an seiner Oberflächenschicht hydrophil gemacht ist und bei dem trotz hoher Hydrophilie keine erhöhte Neigung zu Ablagerungen an der Oberfläche vorhanden ist.

Aufgabe der Erfindung ist es demgegenüber, einen Siliconkautschukformkörper zu schaffen, der mit einem gegenüber diesem bekannten Hydrophilierungsverfahren dahingehend ververbesserten Verfahren erzielt wird, daß nur ein Verfahrensschritt, nämlich lediglich die Äquilibrierungsreaktion durchgeführt werden muß, um die Oberfläche des Siliconkautschukformkörpers hydrophil zu gestalten.

Diese Aufgabe wird gelöst durch die im Anspruch 1 angegebenen Merkmale, wobei die Unteransprüche Weiterbildungen der Erfindung kennzeichnen.

Durch die Erfindung wird ein Siliconkautschukformkörper geschaffen, der an seiner Oberfläche eine hydrophile Zusammensetzung aufweist, die durch eine einstufige Äquilibrierungsreaktion gewonnen werden kann. Bei der Äquilibrierung wird ausgegangen von speziellen Organosiloxanen, die dadurch hergestellt sind, daß SiH-Gruppen enthaltende Siloxane mit Allylverbindungen, die geschützte OH-Gruppen enthalten, in Anwesenheit eines Katalysators, insbesondere $H_2PtCl_6$ umgesetzt werden und gegebenenfalls anschließend hydrolysiert werden, was verfahrensmäßig während der Konditionierung des Siliconkautschukformkörpers geschehen kann und somit keine eigene Verfahrensstufe erfordert. Die Äquilibrierung wird ebenfalls in Anwesenheit eines Katalysators in einem Lösungsmittel, insbesondere Ethern, durchgeführt, wobei als Katalysator Lewissäuren, insbesondere Hexachlorcyclotriphosphazen geeignet ist. Die dabei erhaltene Oberflächenzusammensetzung des Siliconkautschukkörpers ist hydrophil, wobei die Sauerstoffdurchlässigkeit des Siliconkautschuks unbeeinträchtigt bleibt. Auch besteht keine Neigung zu Ablagerungen an der Oberfläche des Siliconkautschukkörpers.

Bei der Äquilibrierung werden Siloxangemische verschiedener Molekülgröße in ein molekulares Gleichgewicht gebracht. Als Katalysatoren können dabei Protonen und Lewissäuren (W.J. Patnode, C.F.Wilcock, J.Am.Chem.Soc. 68, 358 (1946), D.T. Hurd, J.Am.Chem.Soc. 77, 2998 (1955), DE-PS 831 098) zum Einsatz kommen.

Bei den behandelten Siliconkautschukformkörpern kann es sich um warm- und kaltvernetzte Polydimethylsiloxankörper handeln, wobei die kaltvernetzten Materialien noch einige Si-H-Gruppen enthalten.

Bei den eingesetzten Äquilibrierungsedukten kann es sich um lineare $\alpha$, $\omega$-Organodimethylsiloxane (1 - 4), lineare trimethylsilylendgestoppte Organomethylsiloxane (7 - 18) cyclische Organomethylsiloxene (20 - 24) und cyclische Diorganosiloxane (25 - 26) handeln. Die Äquilibrierungsreaktion an der Oberfläche der Siliconkautschukformkörper läuft nach folgendem Schema ab:

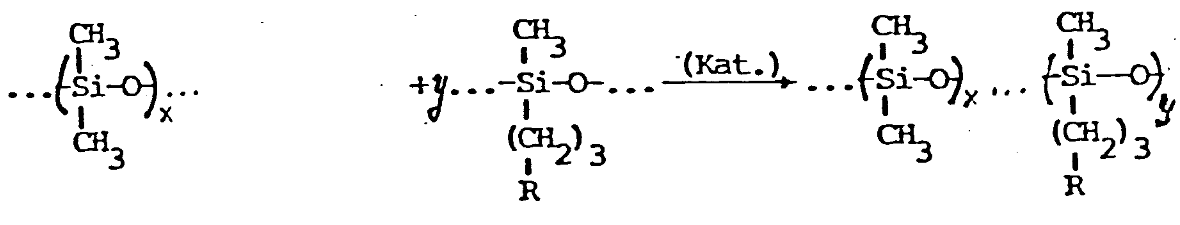


wobei x < y und R eine Hydrophilie verleihende und nur niedrige Polarität schaffende Hydroxyalkylgruppe

ist.

Bei den verwendeten Katalysatoren handelt es sich bevorzugt um die mit guten Ergebnissen angewendete Lewissäure 1,1,3,3,-5,5-Hexachlorcyclotriphosphazen und um konzentrierte Schwefelsäure.

Als lineare Äquilibrierungsedukte wurden eingesetzt: 1,3-Bis(3-trimethylsilyloxypropyl)-1,1,3,3-tetramethyldisiloxan (1), 1,3-Bis(3-hydroxypropyl)-1,1,3,3-tetramethyldisiloxan (2) (G.Greber, S.Jäger, Makrom. Chem. 57, 150 (1962)), 3,5-Bis(3-trimethylsilyloxypropyl)-1,1,1,3,5,7,7,7-octamethyltetrasiloxan, 3,5-Bis(3-hydroxypropyl)-1,1,1,3,5,7,7,7-octamethyltetrasiloxan, 1,3-Bis(6,7-epoxy-4-oxaheptyl)-1,1,3,3-tetramethyldisiloxan (3) (E.P.Plueddeman, G.Fanger, J.Am.Chem.Soc. 81, 2632 (1959)), 1,3-Bis(6,7-dihydroxy-4-oxaheptyl)-1,1,3,3-tetramethyldisiloxan (4), die Additionsprodukte aus Allyloxytrimethylsilan (5) sowie Allylglycidylether (6) mit Polymethylhydrogensiloxanen verschiedener Kettenlänge

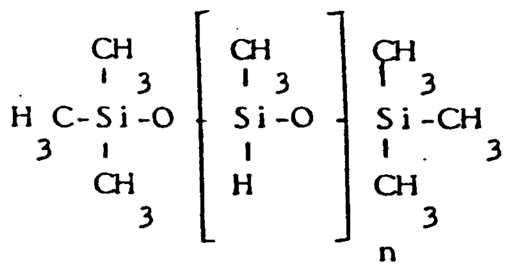 = M-D$^1_n$-M

mit n = 2; 10 bis 50 der allgemeinen Formel

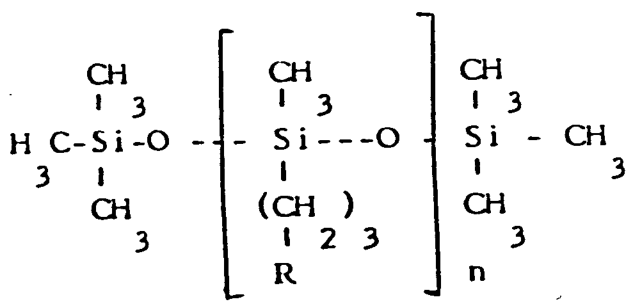

R: -O-Si($CH_3$)$_3$ ;

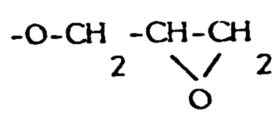

und ihre Hydrolyseprodukte mit

R: -OH; -O-$CH_2$-CH(OH)-$CH_2$-OH.

Im einzelnen handelt es sich dabei um folgende Umsetzungen:

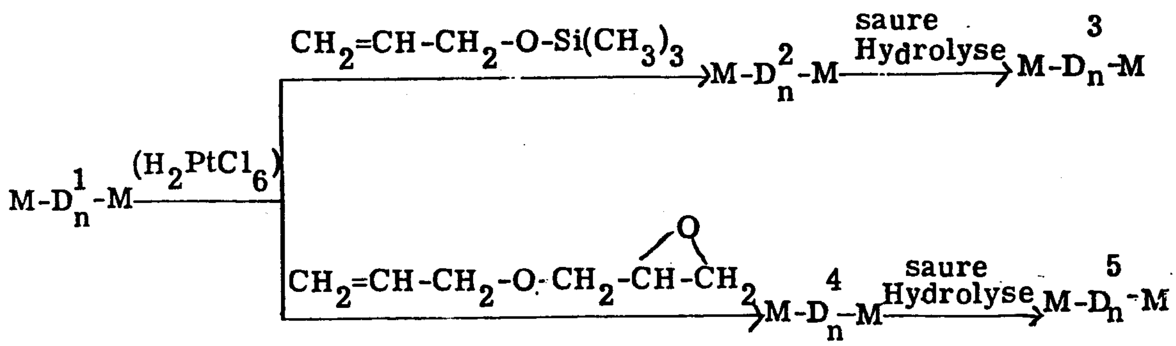


$-D^2_n- = \{O-Si(CH_3)[CH_2-CH_2-CH_2-O-Si(CH_3)_3]\}_n$

n = 2 (7)

n ca. 10 (8)

n ca. 40 (9)

$$-D^3_n- = \{O-Si(CH_3)(CH_2-CH_2-CH_2-OH)\}_n$$

n = 2 (10)

n ca. 10 (11)

n ca. 40 (12)

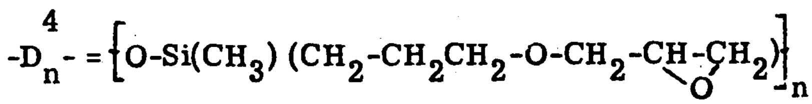

n ca. 10 (13)

n ca. 40 (14)

n ca. 50 (15)

$-D^5_n- = \{O-Si(CH_3)(CH_2-CH_2-CH_2-O-CH_2-CH(OH)-CH_2-OH\}$

n ca. 10 (16)

n ca. 40 (17)

n ca. 50 (18)

Als Ausgangsverbindung für die cyclischen Organomethylsiloxane als Äquilibrierungsedukte wurde 2,4,6,8-Tetramethylcyclotetrasiloxan (R.O.Sauer, W. J. Schreiber, St.D.Brewer, J.Am.Chem.Soc. 68, 962 (1946)), im folgenden Text mit DH4 bezeichnet, verwendet. Durch Addition von (5) bzw. (6) oder Allylacetat (19) an DH4 wurden das 2,4,6,8-Tetrakis(3-trimethylsilyloxypropyl)-2,4,6,8-tetramethylcyclotetrasiloxan (20), das 2,4,6,8-Tetrakis-(6,7-epoxy-4-oxaheptyl)-2,4,6,8-tetramethylcyclotetrasiloxan (21) sowie 2,4,6,8-Tetrakis-(3-acetoxypropyl)-2,4,6,8-tetramethylcyclotetrasiloxan (22) (M.Pflanz, Wissenschaftliche Hausarbeit, FU-Ber-

lin, 1983) synthetisiert:

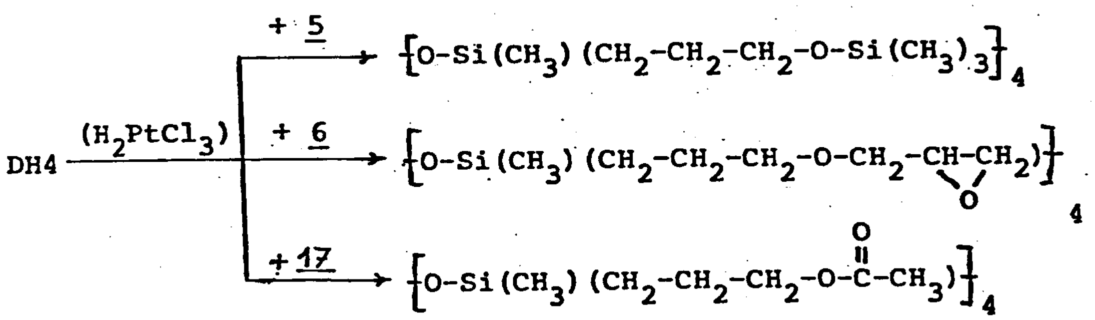


(20)

(21)

(22)

Durch Hydrolyse von (20) sowie (21) wurden 2,4,6,8-Tetrakis-(3-hydroxypropyl)-2,4,6,8-tetramethylcyclotetrasiloxan (23) und 2,4,6,8-Tetrakis(6,7-dihydroxy-4-oxaheptyl)-2,4,6,8-tetramethylcyclotetrasiloxan (24) hergestellt:

(20) 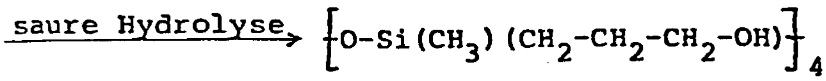

(23)

(21) 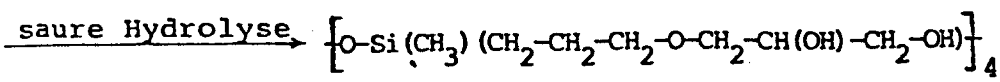

(24)

Als Beispiele für cyclische Diorganosiloxane als Äquilibrierungsmittel können 2,2,4,4,6,6,8,8-Octakis-(3-acetoxypropyl)cyclotetrasiloxan (25) und 2,2,4,4,6,6,8,8-Octakis(3-hydroxypropyl)cyclotetrasiloxan (26) verwendet werden, deren Synthesen (A. Fluthwedel, Diplomarbeit, Freie Universität Berlin, 1984) nachstehend beschrieben werden.

Ausgehend von $SiCl_4$ wurde mit 2 Äquivalenten Allylmagnesiumbromid Diallyldichlorsilan erhalten, an das unter UV-Bestrahlung HBr zum Bis(3-brompropyl)dichlorsilan angelagert wurde. Dieses wurde bei -5 bis 0° C auf ein Gemisch aus Eis, $NaHCO_3$ und Ether getropft, wobei 2,2,4,4,6,6,8,8-Octakis(3-brompropyl)-cyclotetrasiloxan entstand. Durch Kochen dieser Verbindung mit Kaliumacetat in Eisessig wurde 2,2,4,4,6,6,8,8-Octakis(3-acetoxypropyl)cyclotetrasiloxan (25) gebildet, das bei der Methanolyse in Gegenwart von Natriummethanolat als Umesterungskatalysator 2,2,4,4,6,6,8,8-Octakis(3-hydroxypropyl)-cyclotetrasiloxan (26) lieferte.

Diallyldichlorsilan

In einem 1-1-Dreihalskolben mit Rückflußkühler und Tropftrichter wurden 29 g (170 mmol) $SiCl_4$ in 150 ml wasserfreiem Ether vorgelegt. Durch Glaswolle filtrierte Allylmagnesiumbromid-Lösung [aus 10 g (400 mmol) Mg und 41,5 g (34 mmol) Allylbromid in 250 ml wasserfreiem Ether] wurde bei Raumtemperatur dazugetropft, wobei MgBrCl ausfiel. Nach 1,5 h Kochen unter Rückfluß und Waschen des Rückstandes wurde Diallyldichlorsilan bei 56° C und 16 h Pa als farblose Flüssigkeit in 15 %iger Ausbeute erhalten.

In ebenfalls 15 %iger Ausbeute wurde daneben Allyltrichlorsilan (Sdp. 24° C bei 16 h Pa) erhalten.

1H-NMR($CDCl_3$); 2,1(d, Sr$CH_2$-, 2H), 5,2(d, -CH=$CH^1H^2$, 1H), 5,3 (S, CH=$CH^1H^2$, 1H) 5,8(m,$CH_2$-CH=$CH_2$, 1H).

Bis(3-brompropyl)dichlorsilan

In einem 100-ml-Erlenmeyerkolben aus Quarz wurde in 9,5 g (50 mmol) vorstehender Verbindung bei Eis/Wasser/Kühlung so lange HBr eingeleitet, bis entnommene Proben die NMR-Signale der Ausgangsverbindung nicht mehr zeigten (40 min). Destillation über eine 30 cm-Drehbandkolonne lieferte bei 98° C und 0,01 h Pa 14,3 g (Bis(3-brompropyl)-dichlorsilan (= 83 %) als farblose Flüssigkeit.

IR (Film): 3020 $cm^{-1}$, $\nu_{CH}$ aus -$CH_2$-Br; 2970 und 2860 $cm^{-1}$,$\nu_{CH}$; 1440 $cm^{-1}$,$\delta$CH; 1410 $cm^1$ , $\delta_{CH}$ aus Si-$CH_2$-; 770 und 700 $cm^1$ , aus C-Br und $CH_2$.

$^1$H-NMR($CDCl_3$): 1,30(q, Si-$CH_2$-,2H), 2,07(m, -$CH_2$-$CH_2$-$CH_2$-, 2H), 3,45(t, -$CH_2$-Br, 2H).
MS: 219 (99 %, $M^+$-$(CH_2)_3Br$), 177 (100 %, $SiBrCl_2$)

| | | | |
|---|---|---|---|
| $C_6H_{12}Er_2Cl_2Si$(343,0) | Berechnet:<br>Gefunden: | C 21,01<br>C 20,64 | H 3,53<br>H 3,62 |

2,2,4,4,6,6,8,8-Octakis(3-brompropyl)cyclotetrasiloxan

In einem 250 ml-Dreihalskolben mit Kühler und Tropftrichter wurde eine Suspension von 6,7 g (80 mmol) ZnO in 55 ml Methylacetat vorgelegt. Unter Rühren wurden 10 g (30 mmol) der vorstehenden Verbindung, gelöst in 30 ml Methylacetat, dazugetropft. Nach 2 h Kochen unter Rückfluß wurden 50 ml Benzol zugefügt. Die abgekühlte Lösung wurde abgesaugt und zweimal mit je 50 ml Wasser gewaschen. Die organische Phase wurde mit ca. 80 ml Ethanol versetzt und über $Na_2SO_4$ getrocknet. Nach dem Abziehen des Lösungsmittels blieb die gewünschte Verbindung als hochviskoses farbloses Öl zurück. Ausbeute: 13,1 g (= 22 %).

$^1$H-NMR($CD_3$-CO-$CO_3$): 0,83 (q. Si-$CH_2$-, 2H), 1,9 (m, -$CH_2$-$CH_2$-$CH_2$Br, 2H), 3,5(t, -$CH_2$-Br, 2H).

| | | | |
|---|---|---|---|
| $C_{24}H_{48}Br_8O_4Si_4$ (1120,3) | Berechnet:<br>Gefunden: | C 25,02<br>C 23,83 | H 4,20<br>H 4,17 |

2,2,4,4,6,6,8,8-Octakis(3-acetoxypropyl)cyclotetrasiloxan (25)

In einer siedenden Lösung von 20 g (20 mmol) Kaliumacetat in 30 ml Eisessig wurden 15,3 g (13 mmol) vorstehender Verbindung eingetropft. Nach 24 h Kochen am Rückfluß wurde das ausgechiedene KBr abgesaugt und der Eisessig im Vakuum abgezogen. Der Rückstand wurde mit Ether aufgenommen, wobei das Kaliumacetat zurückblieb. Es wurde dreimal mit je 25 ml Ether gewaschen. Die vereinigten Etherlösungen wurden im Vakuum bei Raumtemperatur eingeengt, wobei die gewünschte Verbindung als gelbliche zähflüssige Substanz erhalten wurde. Ausbeute 81 %.

$^1$H-NMR($C_2D_5$-OD); 0,66 (t, Si-$CH_2$-, 2H), 1,71(m, -$CH_2$-$CH_2$-$CH_2$-2H), 2,04(s, -$CH_3$ , 3H) 4,04(t, -$CH_2$-$CH_2$-$CH_2$-O-, 2H)
MS: 884 (23 %, $M^+$ - $(CK_2)_3$-O-CO-$CH_3$)

| | | | |
|---|---|---|---|
| $C_{40}H_{72}O_{20}Si_4$ (985,3) | Berechnet:<br>Gefunden: | C 48,76<br>C 46,47 | H 7,37<br>H 7,19 |

2,2,4,4,6,6,8,8-Octakis(3,hydroxypropyl)cyclotetrasiloxan (26).

In einem 100-ml-Dreihalskolben wird eine Lösung aus 0,18 g (7,8 mmol) Natrium in 20 ml wasserfreiem Methanol vorgelegt, und es wird die Lösung von 2,63 g (2,7 mmol) der vorstehenden Verbindung in 10 ml wasserfreiem Methanol eingetropft. Bereits während des Zutropfens wird das gebildete Methanol-Methylacetat-Azeotrop bei 58 - 62° C abdestilliert. Bei Erreichen des Siedepunktes des reinen Methanols wurde dieses im Vakuum abgezogen. Der Rückstand wurde in ca. 15 ml Wasser aufgenommen und mit verdünnter HCl neutralisiert. Es wurde zur Trockne eingeengt. Der Rückstand wurde mit Ether digeriert, wobei der eingesetzte Ether in Lösung ging. Das gewaschene Produkt wurde in Ethanol aufgenommen und dabei vom NaCl befreit. Nach dem Trocknen der Lösung mit $CaH_2$ wurde das Lösungsmittel im Vakuum abgezogen. Die gewünschte Verbindung wurde als farbloser Feststoff in 74 % Ausbeute erhalten.

IR(Film): 3600-3100 $cm^{-1}$, $\nu_{CH}$; 2940, 2880 $cm^{-1}$, $\nu_{CH}$; 1440 $cm^{-1}$, $\delta_{CH1}$ aus -$CH_2$-; 1415, $\delta_{CH}$ aus Si-$CH_2$-; 1150, 1010 $cm^1$ , $\nu_{COH}$; 1060 $cm^{-1}$ (Si-O-Si für Cyclotetrasiloxane, D. N. Kendall, Applied Infrared Spectroscopy, Chapman & Hall Ltd., London 1966, p. 51).

$^1$H-NMR ($CD_3$-OD): 0,64 (m, Si-$CH_2$-, 2H), 1,64 (m, Si-$CH_2$-$CH_2$-, 2H), 3,52(t, -$CH_2$-OH, 2H), 4,85(s, -OH, 1H).

| | | | |
|---|---|---|---|
| $C_{24}H_{56}O_{12}Si_4$ (649,0) | Berechnet:<br>Gefunden: | C 44,47<br>C 43,08 | H 8,70<br>H 7,98 |

Als Lösungsmittel für die Äquilibrierung der Siliconkautschukformkörper eignen sich Ether, die gegenüber den Äquilibrierungsedukten und den Siliconkautschukmaterialien inert sein müssen. Die Äquilibrierungsedukte wurden in dem betreffenden Lösungsmittel gelöst. Nach Zugabe des Äquilibrierungskatalysators wurden die Formkörper bei Temperaturen von 80 bis 110° C langsam in der Lösung gerührt. Nach der Äquilibrierung wurden die Formkörper entsprechend dem eingesetzten Äquilibrierungsedukt weiter behandelt. Bei Verwendung der OH-Gruppen enthaltenden Äquilibrierungsedukte wurden die Siliconkautschukformkörper abgespült und getrocknet bzw. in physiologischer Kochsalzlösung konditioniert. Wenn hydroxygruppengeschützte Äquilibrierungsmittel eingesetzt werden, können die Schutzgruppen mit 5 %iger Mineralsäure im Anschluß an die Äquilibrierungsreaktion abgespalten bzw. der Oxiranring geöffnet werden. Nach 24stündigem Hydratisieren wurden die Siliconkautschukformkörper getrocknet bzw. konditioniert.

Experimenteller Teil

Die Darstellung der Äquilibrierungsedukte (1) bis (4), (7), (10) sowie (20) und (23) ist in der europäischen Patentanmeldung EP-A1-205,888 mit dem Titel "Modifizierter Silikonkautschuk und seine Verwendung als Material für eine optische Linse sowie optische Linse aus diesem Material" spezifisch beschrieben. Diese Edukte können auch auf zu den nach folgenden Beispielen analoge Weise hergestellt werden.

Addition von Allylverbindungen an Polymethylhydrogensiloxane

10 mmol trimethylsilylendgestopptes Polymethylhydrogensiloxan wurden in 200 ml Dioxan vorgelegt und zum Sieden erhitzt. Nach Zugabe von 2 ml 1 Gew.%iger $H_2PtCl_6$-Lösung in Diethylenglykoldimethylether wurden pro angegebener -O-Si($CH_3$)H-Einheit äquivalente Mengen Allylverbindung unter Rühren zugetropft. Nachdem das Reaktionsgemisch 6 h unter Rückfluß gerührt worden war, wurde die Lösung eingeengt und die Restanteile an Lösungsmittel und nicht verbrauchter Additionskomponente wurden bei 70° C und 0,1 - 0,05 hPa entfernt. Anschließend wurden unlösliche Anteile durch Filtration abgetrennt.

$\alpha$-(Trimethylsilyl)-$\omega$-(trimethylsilyloxy)poly methyl-(3-trimethylsilyloxypropyl)siloxan (8) n ca. 10). Aus 7,6 g (10 mmol) Polymethylhydrogensiloxan M-$D_n^1$ -M (n ca. 10; Baysilonöl MH 4) und 13,0 g (100mmol) Allyloxytrimethylsilan. Ausbeute: 19,4 g (94,2 %); $n_D^{20}$ :1,4350

| | | | |
|---|---|---|---|
| $C_{76}H_{198}O_{21}Si_{22}$ (2066,4) | Ber.<br>Gef. | C 44,18<br>C 36,98 | H 9,66<br>H 8,21 |

$\alpha$-(Trimethylsilyl)-$\omega$-(trimethylsilyloxy)poly [methyl-(3-trimethylsilyloxypropyl)siloxan] (9, n ca. 40). Aus 25,6 g (10mmol) Polymethylhydrogensiloxan M-$D_n^1$ -M (n ca. 40; Baysilonöl MH 15 ) und 52,0 g (400 mmol) Allyloxytrimethylsilan. Ausbeute: 73,7 g (95 %); $n_D^{20}$ : 1,4370.

| | | | |
|---|---|---|---|
| $C_{286}H_{738}O_{81}Si_{82}$ (7778,4) | Ber.<br>Gef. | C 44,16<br>C 40,69 | H 9,56<br>H 8,59 |

$\alpha$ -(Trimethylsilyl)-$\omega$-(trimethylsilyloxy)poly [methyl-(6,7-epoxy-4-oxaheptyl)siloxan] (13), n ca. 10) Aus 7,6 g (10 mmol) Polymethylhydrogensiloxan M-$D_n^1$ -M (n ca. 10; Baysilonöl MH 4) und 11,4 g (100mmol) Allylglycidylether. Ausbeute: 18,0 g (94,7 %); $n_D^{20}$ : 1,4528.

| | | | |
|---|---|---|---|
| $C_{76}H_{158}O_{31}Si_{12}$ (1905,2) | Ber.<br>Gef. | C 47,91<br>C 47,41 | H 8,36<br>H 8,29 |

$\alpha$ - (Trimethylsilyl)-$\omega$ - (trimethylsilyloxy)poly [methyl-(6,7-epoxy-4-oxyheptyl)siloxan] (14) n ca. 40). Aus 25,6 g (10 mmol) Polymethylhydrogensiloxan M-$D_n^1$ -M (n ca. 40; Baysilonöl MH 15 ) und 45,6 g (400 mmol) Allylglycidylether. Ausbeute: 67,1 g (94,2 %); $n_D^{20}$ : 1,4611.

| | | | |
|---|---|---|---|
| $C_{286}H_{578}O_{121}Si_{42}$ (7133,4) | Ber.<br>Gef. | C 48,16<br>C 45,65 | H 8,17<br>H 8,00 |

α -(Trimethylsilyl)-ω-(trimethylsilyloxy)poly [methyl-(6,7-epoxy-4-oxaheptyl)siloxan] (15), n ca. 50). Aus 31,6 g (10 mmol) Polymethylhydrogensiloxan M-$D^1_n$ -M (n ca. 50; Baysilonöl MH 20/30) und 57,0 g (500 mmol) Allylglycidylether. Ausbeute: 84,4 g (95,2 %); $n_D^{20}$ : 1,4622.

| | | | |
|---|---|---|---|
| $C_{356}H_{718}O_{151}Si_{52}$ (8876,2) | Ber.<br>Gef. | C 48,17<br>C 44,83 | H 8,15<br>H 7,94 |

Hydrolyse der Verbindungen (8), (9) und (13) - (15)

5 mmol der vorstehend beschriebenen Siloxanverbindungen wurden in 100 ml Chloroform aufgenommen, 200 ml 5 Gew.-%ige Salzsäure zugegeben und bei Raumtemperatur 12 h gerührt. Nach Zugabe von 200 ml Chloroform wurde noch 30 min gerührt, in einen Schütteltrichter überführt und die wäßrige Phase abgetrennt. Die organische Phase wurde neutral gewaschen, über $Na_2SO_4$ getrocknet und am Rotavapor eingeengt. Die Restanteile an Lösungsmittel und Trimethylsilanol bzw. Hexamethyldisiloxan wurden im Vakuum bei 0,1 - 0,05 hPa entfernt, wobei die Temperatur gegen Ende des Abziehens auf 70°C gesteigert wurde.

α -(Trimethylsilyl)-ω-(trimethylsilyloxy)poly [methyl-(3-hydroxypropyl)siloxan] (11), n ca. 10). Aus 10,3 g (5 mmol) (8) Ausbeute: 6,6 g (98,5 %); $n_d^{20}$ : 14398.

| | | | |
|---|---|---|---|
| $C_{46}H_{118}O_{21}Si_{12}$ (1344,5) | Ber.<br>Gef. | C 41,09<br>C 35,78 | H 8,85<br>H 8,28 |

α-(Trimethylsilyl)-ω-(trimethylsilyloxy)poly [methyl-(3-hydroxypropyl)siloxan] (12), n ca. 40). Au 38,0 g (5 mmol) der Verbindung (9). Ausbeute: 24,0 g (98,0 %); $n_D^{20}$ : 1,4420.

| | | | |
|---|---|---|---|
| $C_{166}H_{418}O_{81}Si_{42}$ (4890,9) | Ber.<br>Gef. | C 40,77<br>C 36,96 | H 8,61<br>H 8,63 |

α -(Trimethylsilyl)-ω-(trimethylsilyloxy)poly [methyl-(6,7-dihydroxy-4-oxaheptyl)siloxan] (16), n ca. 10). Aus 9,5 g (5 mmol) der Verbindung (13). Ausbeute: 9,4 g (90,4 %); $n_D^{20}$ : 1,4678.

| | | | |
|---|---|---|---|
| $C_{76}H_{187}O_{41}Si_{12}$ (2085,3) | Ber.<br>Gef. | C 43,77<br>C 38,90 | H 8,60<br>H 7,33 |

α -(Trimethylsilyl)-ω -(trimethylsilyloxy)poly [methyl-(6,7-dihyroxy-4-oxaheptyl)siloxan] (17), n ca. 40). Aus 35,6 g (5 mmol) der Verbindung (14). Ausbeute: 38,0 g (96,0 %); $n_D^{20}$ : 1,4755,

| | | | |
|---|---|---|---|
| $C_{286}H_{658}O_{161}Si_{42}$ (7854,0) | Ber.<br>Gef. | 43,74<br>C 44,71 | H 8,44<br>H 7,98 |

α-(Trimethylsilyl)-ω -(trimethylsilyloxy)poly [methyl-(6,7-dihydroxy-4-oxaheptyl)siloxan] (18), n ca. 50). Aus 44,3 g (5 mmol) der Verbindung (15). Ausbeute: 45,4 g (93,0 %); $n_D^{20}$ : 1,4729.

| | | | |
|---|---|---|---|
| $C_{356}H_{818}O_{201}Si_{52}$ (9776,9) | Ber.<br>Ber. | C 43,73<br>C 41,12 | H 8,43<br>H 7,70 |

2,4,6,8-Tetrakis(6,7-epoxy-4-oxaheptyl)-2,4,6,8-tetramethylcyclotetrasiloxan (21).

In einem 250-ml-Dreihalskolben mit Rührer, Tropftricher, Innenthermometer und Kühler wurden 57,1 g (0,5 mol) Allylglycidylether vorgelegt und auf 110° C erhitzt. Nach der Zugabe von 1 ml einer 1 Gew.-%igen $H_2PtCl_6$-Lösung in Diethylenglykoldimethylether wurden unter starkem Rühren 24,0 g (0,1 mol) 2,4,6,8-Tetramethylcyclotetrasiloxan sehr rasch zugegeben, wobei die Innentemperatur auf 195° C anstieg.
Nach der Zugabe von 2,4,6,8-Tetramethylcyclotetrasiloxan wurde noch so lange weitergerührt, bis die Temperatur des Reaktionsproduktes auf 130° C gesunken war. Nichtumgesetzte Anteile Allylglycidylether und 2,4,6,8-Tetramethylcyclotetrasiloxan wurden durch Rühren des Reaktionsgemisches bei 60-70° C im Ölpumpenvakuum bei 0,1 hPa entfernt. Das leicht gelbliche Rohprodukt (77,8 %); $n_D^{20}$ :1,4633, wurde einer fraktionierten Vakuumdestillation mit Füllkörperkolonne unterworfen. Die Verbindung (21) destillierte bei ca. 335°C und 1 hPa als klare viskose Flüssigkeit über, wobei der größte Teil polymerisierte. $n_D^{20}$ : 1,4668.
IR(Film): 3060(m; OCH), 1110(s; C-O-C) und 1060 $cm^{-1}$ (vs; Si-O-Si).
MS: m/z 333$(M-C_{14}H_{28}O_7Si_2)^+$ (4); 318$(M-C_{14}H_{28}O_7Si_2,-CH_3)^+$ (4); 202$(C_7H_{14}O_3Si_2)^+$ (21); 101 $(CH_2-CH_2-O-CH_2-CH-CH_2-O)^+$ (41); 85$(C_2H_5OSi_2)^+$ (100).
$^1$H NMR($CDCl_3$):$\delta$ = 0,08 (s; Si-$CH_3$, 12H), 0,42- (m; Si-$CH_2$-, 8H), 1,50 (m; -$CH_2$-$CH_2$-$CH_2$, 8H),

2,50 (q; $-CH_2-CH-CH_2-O$, 4H),

2,78 (t; $-CH_2-CH-CH_2-O$, 4H), 3,10 (m; $-CH_2-CH-CH_2-O$, 4H),

3,34 (m; -$CH_2CH_2$-O, 4H) 3,40 (m; -O-$CH_2$-CH, 4H), 3,66 (g; -O-$CH_2$-CH, 4H).

| | | | |
|---|---|---|---|
| $C_{28}H_{56}O_{12}Si_4$ (697,1) | Ber.<br>Gef. | C 48,24<br>C 47,47 | H 8,10<br>H 8,03 |

2,4,6,8-Tetrakis(6,7-dihydroxy-4-oxaheptyl)-1,4,6,8-tetramethylcyclotetrasiloxan (24).

Zu 14 g (20 mmol) der Verbindung (21) wurden 50 ml 5 Gew.-%ige Salzsäure gegeben, und es wurde bei Raumtemperatur 24 h gerührt, in einem Schütteltrichter überführt und 100 ml Ether zugesetzt, um die Trennung der organischen von der wäßrigen Phase zu beschleunigen. Nach der Trennung der beiden Phasen wurde die wäßrige Phase noch zweimal mit je 50 ml Ether extrahiert. Die vereinigten Etherphasen wurden mit destilliertem Wasser säurefrei gewaschen und über $Na_2SO_4$ getrocknet.
Die Hauptmenge Lösungsmittel wurde am Rotavapor entfernt und die Restanteile unter Rühren an der Ölpumpe bei 0,3 hPa. Nach Absaugen über eine G-4-Fritte wurde die Verbindung (24) als viskose klare Flüssigkeit erhalten.
Ausbeute 14,8 g (96,2 %); $n_D^{20}$ : 1,4705.
IR(Film): 3450(m; -OH), 1115(vs; C-O-C) und 1085 $cm^{-1}$ (vs; Si-O-Si).
MS: m/z 384$(M-C_{14}H_{32}O_8Si_2)^+$ (6); 369$(M-C_{14}H_{32}O_8Si_2,-CH_3)^+$ (8); 192$(C_7H_{17}O_4Si)^+$ (30); 133$(C_6H_{13}O_3)^+$ -(100).
$^1$H NMR($CDCl_3$): $\delta$ = 0,08 (s; Si-$CH_3$, 12H), 0,50 (m; Si-$CH_2$-, 8H), 1,58 (m; -$CH_2$-$CH_2$-$CH_2$-, 8H), 3,0 (s; -CH-OH, 4H), 3,49 (d; -O-$CH_2$-CH, 8H), 3,54 (m; -$CH_2$-OH, 4H), 3,56 (m; -$CH_2$-OH, 8H), 3,94 (m; -CH-OH, 4H).

| | | | |
|---|---|---|---|
| $C_{28}H_{64}O_{16}Si_4$ (769,6) | Ber.<br>Gef. | C 43,72<br>C 43,30 | H 8,39<br>H 8,12 |

2,4,6,8-Tetrakis(3-aceoxypropyl)-2,4,6,8-tetramethylcyclotetrasiloxan (22).

40 g (0,4 mol) Essigsäureallylester und 1 ml 1 Gew.-%ige $H_2PtCl_6$-Lösung in Diethylenglykoldiethyle-

ther wurden auf 50° C erwärmt. Nun wurden 24 g (0,1 mol) DH4 zugetropft, wobei die Temperatur auf 110° C anstieg. Nach beendetem Zutropfen wurde noch 20 h bei 60° C gerührt. Anschließend wurde die Reaktionslösung im Vakuum destilliert, wobei die Verbindung (22) als viskose klare Flüssigkeit bei 122 - 125°C und 1,6 hPa überdestillierte.
Ausbeute: 64,0 g (100 %); $n_D^{20}$ : 1,4120.
IR(film): 1745(vs; $>C=O$), 1080(vs; Si-O-Si) und 805 $cm^{-1}$ (Si-$CH_3$).
MS: m/z 541 ($M^+$) (2); 439($M-2C_5H_9O_2$)$^+$ (81); 338($M-3C_5H_9O_2$)$^+$ (75); 43($CH_3CO$)$^+$ (100).
$^1H$ NMR($CCl_4$):$\delta$ = 0,13 (s; Si-$CH_3$, 12H), 0,55 (m; Si-$CH_2$-, 8H), 1,60 (m; -$CH_2$-$CH_2$-$CH_2$-, 8H), 2,0 (s; $CH_3$-CO-, 12H), 4,00 (t; -$CH_2$-O-, 8H).

| | | | |
|---|---|---|---|
| $C_{24}H_{48}O_{12}Si_4$ (641,0) | Ber.<br>Gef. | C 44,92<br>C 44,47 | H 7,50<br>H 7,35 |

## Allgemeine Verfahrensführung bei der Äquilibrierung von Siliconkautschukformkörpern (F 1) - (F 18).

Heiß- oder kaltvernetzte extrahierte Siliconkautschukformkörper in Folienform wurden in einem organischen Ether mit dem Äquilibrierungsreagenz und dem Katalysator langsam gerührt. Die verwendeten Lösungsmittel, die Äquilibrierungskomponenten und deren Konzentration, die Katalysatorkonzentration, die Äquilibrierungsdauer und die Reaktionstemperatur sind der nachfolgenden Tabelle 1 zu entnehmen. Die Tabelle 1 enthält ausgewählte Beispiele zur Herstellung von hydrophilen Filmen, die eine hohe Sauerstoffdurchlässigkeit aufweisen. Nach beendeter Reaktion wurden die Folien mit Ether/Aceton abgespült und danach 24 h in destilliertem Wasser bei Raumtemperatur gerührt und anschließend bei 80° C getrocknet.

Bei Verwendung einer OH-geschützten Verbindung (wie z. B. der Verbindung (21) als Äquilibrierungsreagenz wurde zunächst wie oben beschrieben verfahren. Nach Abspülen mit Ether/Aceton wurden die so behandelten Folien jedoch kurz mit destilliertem Wasser abgespült und dann bei Raumtemperatur mit 5 Gew.%iger Salzsäure 24 h gerührt, anschließend mit destilliertem Wasser abgespült und nochmals 24 h bei Raumtemperatur gewässert und dann bei 80° C getrocknet.

## Diskussion der Ergebnisse

### Spektren der linearen Äquilibrierungsreagenzien (7)-(18)

Die IR-Spektren der Verbindungen (7) - (18) zeigen die für das Siloxangerüst typischen Schwingungen bei 1260 $cm^{-1}$ ($\delta$; Si-$CH_3$), 1050 $cm^{-1}$ ($\bar{\nu}$; Si-O-Si) und 800 $cm^{-1}$ ($\nu_{as}$; Si-$CH_3$). Die Valenzschwingungsbande der Si-H-Bindung bei 2170 $cm^{-1}$ ist im Gegensatz zu den Ausgangsprodukten nicht mehr sichtbar, dafür ist im Bereich 2800 - 3000 $cm^{-1}$ eine erhöhte Bandenanzahl zu finden, die der symmetrischen und asymmetrischen Valenzschwingung der Methylengruppe und der symmetrischen Valenzschwingung der Methylgruppe zugeordnet werden können. Die hydrolysierten Additionsprodukte (11), (12), (16), (17) und (18) weisen bei 3400 $cm^{-1}$ die breite Absorptionsbande der OH-Valenzschwingung auf.

Die $^1H$ NMR-Spektren zeigen die erwarteten Signale für den Siloxananteil bei $\delta$ ca. 0,1 ppm. Die Signale für die Protonen der Organoreste liegen bei den erwarteten chemischen Verschiebungen.

### FMIR-IR-Spektren der äquilibrierten Folien

N. J. Harrick (J. physik. Chem. 64, 1110 (1960) und J. Fahrenfort (Spectrochem. Acta 17, 698 (1961) beschreiben für stark absorbierende Stoffe die sogenannte ATR-IR-Aufnahmetechnik (attenuated total reflectante. Bei einer speziellen Proben-Kristall-Anordnung kommt es zu einer Vielfachreflexion, wobei die Methode als FMIR-IR-Spektroskopie (frustrated multiple internal reflection) bezeichnet wird. Hinsichtlich der Bandenlagen können FMIR-IR-Spektren und Transmissionsspektren miteinander verglichen werden. Zur Auswertung der äquilibrierten Folien wurde der Wellenzahlbereich 2700 - 3800 $cm^{-1}$ herangezogen, hier ist

ein Vergleich der Oberflächenbeschaffenheit der Proben noch gut möglich, da erst im längerwelligen Bereich die Eindringtiefe zunimmt. Die unbehandelten Folien zeigen im Bereich 2700 - 3800 $cm^{-1}$ zwei Banden, die C-H-Schwingungen der Methylgruppen zugeordnet werden müssen ($\nu_s$; 2960 $cm^{-1}$, $\nu_{as}$; 2900 $cm^{-1}$).

Die Spektren der äquilibrierten Folien zeigen im Bereich 3300 - 3400 $cm^{-1}$ verschieden stark ausgeprägte OH-Valenzbandenintensitäten. Zusätzlich ist bei ca. 2880 $cm^{-1}$ die symmetrische Schwingung des zusätzlich hinzugekommenen $-CH_2$Fragments zu sehen. Bei Verwendung der linearen Siloxane als Äquilibrierungsedukte wurden bei den kurzkettigen Verbindungen (1) - (6) höhere Bandenintensitäten gefunden als bei Verwendung der Siloxane (7) - (18). Von den Siloxanen (7) - (18) konnten nur mit dem Siloxan (8) gute Bandenintensitäten erzielt werden. Die FMIR-IR-Spektren der restlichen behandelten Folien wiesen kaum Unterschiede gegenüber dem Spektrum der unbehandelten Probe auf. Die größten OH-Bandenintensitäten wurden bei Verwendung der cyclischen Tetrasiloxane erzielt, wobei hierbei die Folien, die 4 h bei 100° C und einer Katalysatorkonzentration von 1 Gew.-%, bezogen auf die eingesetzte Siloxanmenge, äquilibriert wurden, die intensivsten OH- und $-CH_2$-Bandenintensitätszunahmen aufwiesen.

Die Sauerstoffdurchlässigkeit der äquilibrierten Siliconkautschukfolien.

An den äquilibrierten Siliconkautschukfolien wurde mit einem Oxygen flux meter von Schema Versatae die Sauerstoffdurchlässigkeit bestimmt. Die Sauerstoffpermeabilität in den äquilibrierten Folien zeigt keine wesentlichen Veränderungen gegenüber einer unbehandelten Folie (F 0). Da die Sauerstoffdurchlässigkeit von Siliconkautschukmaterial von der Dicke (F. J. Haberich, Referatesammlung der 12. Aschaffenburger Kontaktlinsentagung vom 22. bis 24. März 1979, S. 16) abhängig ist, werden in Tabelle 2 neben der Sauerstoffpermeabilität P die Transmissivity T und der Sauerstofffluß J angegeben. Die mit den Verbindungen (7) - (18) äquilibrierten Folien zeigten schon in den FMIR-IR-Spektren keine bzw. nur geringfügige Veränderungen; es wurde deshalb von ihnen keine Sauerstoffdurchlässigkeit gemessen.

Der Kontaktwinkel der äquilibrierten Siliconkautschukfolien

Für die Benetzbarkeit der Siliconkautschukfolien ist der Kontaktwinkel eine charakteristische Größe. Unbehandelte Siliconfolien haben Kontaktwinkel, die bei ca. 85 liegen. Hydrophile Materialien weisen kleinere Kontaktwinkel als 66° (Ch. F. Kreiner, "Kontaktlinsenchemie", Median Verlag Heidelberg, 1980, S. 84) auf. Die Kontaktwinkel der in Tabelle 2 ausgewählten Siliconkautschukfolien besitzen alle wesentlich kleinere Werte, d. h. sie weisen eine relativ gute Benetzbarkeit auf, was für Materialien, die für Kontaktlinsen Verwendung finden sollen, notwendig ist.

Der Wassergehalt der äquilibrierten Siliconkautschukfolien.

Der Wassergehalt wurde nach der bei G. Koßmehl, N. Klaus, H. Schäfer, (Angew. Markromol. Chem. 123/124, 241 (1984)) angegebenen Methode bestimmt. Das nur an der Oberfläche hydrophilierte Siliconmaterial zeigt nur eine geringe Waseraufnahme, wie es bei Siliconkautschuk zu erwarten ist. Die Werte liegen bei den in Tabelle 2 ausgewählten Folien bis auf zwei Ausnahmen unter 2 Gew.-%.

Verwendbarkeit als Kontaktlinsenmaterial

Die Darstellung von OH-Endgruppen tragenden Organosiloxanen und deren Äquilibrierung mit handelsüblichen Siliconkautschukfolien nach dem vorstehend beschriebenen Verfahren brachte für die Sauerstoffdurchlässigkeit der Siliconkautschukfolien keine wesentliche Verringerung mit sich. Die gemessenen Werte für die Sauerstoffpermeation lassen einen mehr als ausreichenden Sauerstofftransport durch das Material zu, um es als Kontaktlinsenmaterial zu verwenden. Die hohe Hydrophobie des Siliconmaterials konnte durch die Oberflächenmodifizierung so weit abgesenkt werden, daß es sich nunmehr um ein oberflächenhydrophiles Material handelt. Der Wassergehalt der Siliconkautschukfolien liegt bei Werten, die auch unbehandeltes Siliconmaterial aufweist. Die so behandelten Siliconkautschukfolien bleiben glasklar und sind als Kontaktlinsenmaterial bestens geeignet.

Tab. 1 Angaben zur Herstellung ausgewählter Siliconkautschukfolien durch Äquilibrierung in der Folienoberfläche

| Folie | Äquilibrierungs-reagenz | Gew.-% | Lösungs-mittel | Katalysator c) in Gew.-% | t/h | t/°C |
|---|---|---|---|---|---|---|
| F 1 | 2 | 10 | EGDM[a)] | 1,0 | 12 | 100 |
| F 2 | 2 | 10 | | 1,0 | 24 | 100 |
| F 3 | 2 | 10 | | 0,4 | 48 | 100 |
| F 4 | 4 | 20 | DEGDM[b)] | 0,4 | 24 | 100 |
| F 5 | 4 | 20 | | 0,4 | 2 | 100 |
| F 6 | 4 | 20 | | 0,4 | 4 | 100 |
| F 7 | 23 | 20 | | 0,4 | 2 | 100 |
| F 8 | 23 | 20 | | 0,4 | 4 | 100 |
| F 9 | 23 | 20 | | 0,4 | 24 | 100 |
| F10 | 23 | 10 | | 0,4 | 17 | 110 |
| F11 | 23 | 10 | | 0,4 | 20 | 110 |
| F12 | 23 | 10 | | 0,4 | 24 | 110 |
| F13 | 23 | 10 | | 0,4 | 48 | 110 |
| F14 | 23 | 20 | | 0,4 | 24 | 110 |
| F15 | 23 | 20 | | 0,4 | 28 | 110 |
| F16 | 24 | 5 | Dioxan | 1,0 | 1 | 100 |
| F17 | 24 | 5 | | 1,0 | 4 | 100 |
| F18 | 24 | 5 | | 1,0 | 24 | 100 |
| F19 | 22 | 50 | DEGDM | 0,5 | 48 | 120 |

a) Ethylenglykoldimethylether

b) Diethylenglykoldimethylether

c) Hexachlorcyclotriphosphazen

Tab. 2 Sauerstoffdurchlässigkeit, Kontaktwinkel und Wassergehalt der äquilibrierten Siliconkautschukfolien

| Folie | Foliendicke in mm | Sauerstoffdurchlässigkeit $P.10^{11}$ a) | $T.10^{9}$ b) | $J$ c) | Kontaktwinkel in grd | Wassergehalt in Gew.% |
|---|---|---|---|---|---|---|
| F0 | | | | | | 1,0 |
| F1 | 0,308 | 37,0 | 12,0 | 6,7 | 25 | 1,0 |
| F2 | 0,312 | 34,6 | 11,1 | 6,2 | 26 | 1,5 |
| F3 | 0,325 | 3308 | 10,4 | 5,8 | 28 | 0,3 |
| F4 | 0,255 | 2907 | 11,6 | 6,5 | 30 | 3,4 |
| F5 | 0,300 | 31,2 | 10,4 | 5,8 | 24 | 0,5 |
| F6 | 0,338 | 35,5 | 10,5 | 5,9 | 27 | 1,9 |
| F7 | 0,227 | 25,9 | 11,4 | 6,4 | 30 | 1,5 |
| F8 | 0,235 | 24,9 | 10,6 | 5,9 | 36 | 0,9 |
| F9 | 0,268 | 28,5 | 10,6 | 5,9 | 33 | 1,9 |
| F10 | 0,268 | 32,7 | 12,2 | 6,8 | 30 | 1,4 |
| F11 | 0,282 | 32,6 | 11,6 | 6,5 | 36 | 1,2 |
| F12 | 0,253 | 26,6 | 10,5 | 5,9 | 32 | 2,4 |
| F13 | 0,250 | 26,9 | 10,8 | 6,0 | 27 | 1,3 |
| F14 | 0,282 | 28,2 | 10,0 | 5,6 | 21 | 0,2 |
| F15 | 0,281 | 34,0 | 12,1 | 6,8 | 28 | 1,7 |
| F16 | | | | | 39 | 0,8 |
| F17 | | | | | 48 | 0,1 |
| F18 | | | | | 43 | 0,6 |
| F19 | 0,648 | 39,0 | 6,0 | 3,4 | 22 | 3,9 |

a) P in ml $O_2 \cdot cm^2/ml \cdot mmHg \cdot s$; b) T in ml $O_2 \cdot cm/mm\ Hg \cdot s \cdot ml$

c) J in $l/cm^2\ h$

$1 mmHg(0°C) = 1,333 \cdot 10^2 Pa$

Die Siliconkautschukkörper, insbesondere die Kontaktlinsen bzw. intraokularen Augenlinsen, können nachfolgend auch einer Oberflächenbehandlung durch Plasmapolymerisation mit Hilfe einer Plasmaentladung unterzogen werden. Die Plasmaentladung wird in einer Atmosphäre durchgeführt, welche die bei der Äquilibrierungsreaktion vorhandenen Verbindungen aufweist. Die Plasmaentladung kann unter Gleichstrom oder im elektromagnetischen Wechselfeld erfolgen. Bevorzugt erfolgt die Plasmaentladung bei einer

Stromstärke von 5 bis 500 mA und bei einer Spannung im Bereich von 100 bis 1000 Volt. Im Reaktionsgefäß herrscht bei der Durchführung der Plasmapolymerisation ein Vakuum von 13,3 - 0,13 Pa ($10^{-1}$ bis $10^{-3}$ Torr).

## Patentansprüche

1. Verfahren zur Hydrophilierung eines Siliconkautschukformkörpers an seiner Oberfläche, bei dem der Siliconkautschuk an der Oberfläche des Formkörpers mit Organosiloxanen umgesetzt (Äquilibrierungsreaktion) wird, **dadurch gekennzeichnet,** daß bei der Umsetzung Organosiloxane verwendet werden, die hergestellt sind durch Umsetzung von Si-H-Gruppen enthaltenden Siloxanen mit Allylverbindungen, die geschützte OH-Gruppen enthalten, wobei gegebenenfalls das Umsetzungsprodukt anschließend hydrolysiert wird.

2. Verfahren nach Anspruch 1, **dadurch gekennzeichnet,** daß die Organosiloxane eine oder mehrere der folgenden Verbindungen sind: lineare $\alpha$, $\omega$-Organodimethylsiloxane, lineare trimethylsilylendgestoppte Organomethylsiloxane und cyclische Organomethylsiloxane und cyclische Diorganosiloxane.

3. Verfahren nach Anspruch 2, **dadurch gekennzeichnet,** daß die linearen, $\alpha$, $\omega$-Organodimethylsiloxane eine oder mehrere der folgenden Verbindungen sind:

   1,3-Bis(3-trimethylsilyloxypropyl)-1,1,3,3-tetramethyldisiloxan, 1,3-Bis(3-hydroxypropyl)-1,1,3,3-tetramethlyldisiloxan, 3,5-Bis(3-trimethylsilyloxypropyl)-1,1,1,3,5,7,7,7-octamethyltetrasiloxan, 3,5-Bis(3-hydroxypropyl)-1,1,1,3,5,7,7,7-octamethyltetrasiloxan, 1,3-Bis(6,7-epoxy-4-oxaheptyl)-1,1,3,3-tetramethyldisiloxan, 1,3-Bis(6,7-dihydroxy-4-oxaheptyl)-1,1,3,3-tetramethyldisiloxan.

4. Verfahren nach Anspruch 2, **dadurch gekennzeichnet,** daß die linearen trimethylsilylendgestoppten Organomethylsiloxane Additionsprodukte mit der allgemeinen Formel

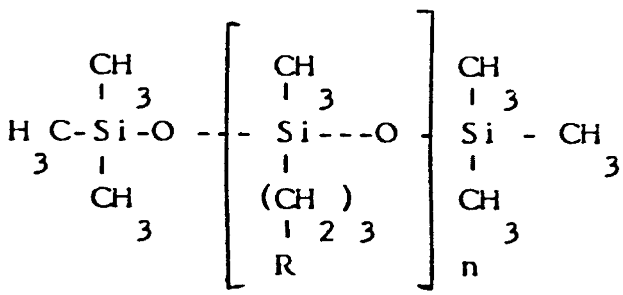

R: $-O-Si(CH_3)_3$;

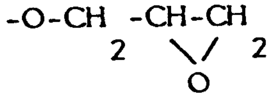

aus Allyloxytrimethylsilan oder Allylglycidylether mit Polymethylhydrogensiloxanen verschiedener Kettenlänge mit der allgemeinen Formel

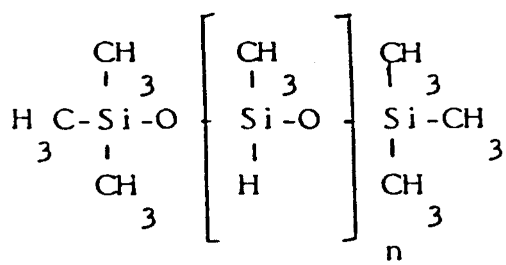

wobei n = 2, 10 - 50 ist oder deren Hydrolyseprodukte mit
R: -OH; $-O-CH_2-CH(OH)-CH_2-OH$ sind.

5. Verfahren nach Anspruch 2, **dadurch gekennzeichnet**, daß die cyclischen Organomethylsiloxane bzw. cyclischen Diorganosiloxane eine oder mehrere der folgenden Verbindungen sind:

2,4,6,8-Tetrakis(3-trimethylsilyloxypropyl)-2,4,6,8-tretramethylcyclotetrasiloxan, 2,4,6,8-Tetrakis-(6,7-epoxy-4-oxaheptyl)-2,4,6,8-tetramethylcyclotetrasiloxan, 2,4,6,8-Tetrakis(3-acetoxypropyl)-2,4,6,8-tetramethylcyclotetrasiloxan, 2,4,6,8-Tetrakis(3-hydroxypropyl)-2,4,6,8-tetramethylcyclotetrasiloxan, 2,4,6,8-Tetrakis(6,7-dihydroxy-4-oxaheptyl)-2,4,6,8-tetramethylcyclotetrasiloxan, 2,2,4,4,6,6,8,8-Octakis(3-acetoxypropyl)cyclotetrasiloxan und 2,2,4,4,6,6,8,8-Octakis(3-hydroxypropyl)cyclotetrasiloxan.

6. Verfahren nach einem der Ansprüche 1 bis 5, **dadurch gekennzeichnet,** daß die Äquilibrierungsreaktion in Anwesenheit eines Katalysators durchgeführt wird.

7. Verfahren nach Anspruch 6, **dadurch gekennzeichnet,** daß als Äquilibrierungskatalysator Lewissäure oder konzentrierte Schwefelsäure verwendet wird.

8. Verfahren nach Anspruch 7, **dadurch gekennzeichnet,** daß als Lewissäure Hexachlorcyclotriphosphazen verwendet wird.

9. Verfahren nach einem der Ansprüche 6 bis 8, **dadurch gekennzeichnet,** daß die Äquilibrierungsreaktion in einem Ether als Lösungsmittel durchgeführt wird.

10. Verfahren nach Anspruch 1, **dadurch gekennzeichnet,** daß die Si-H-Gruppen enthaltenden Siloxane mit den Allylverbindungen in Anwesenheit von $H_2PtCl_6$ als Katalysator umgesetzt werden.

11. Verfahren nach einem der Ansprüche 1 bis 10, **dadurch gekennzeichnet,** daß als Siliconkautschuk Polydimethylsiloxan verwendet wird.

12. Verfahren nach einem der Ansprüche 1 bis 11, **dadurch gekennzeichnet,** daß eine nach folgende Oberflächenbehandlung durch Plasmapolymerisation mit Hilfe einer Plasmaentladung durchgeführt wird in einer Atmosphäre, welche die bei der Äquilibrierungsreaktion vorhandenen Verbindungen aufweist.

13. Verfahren nach Anspruch 12, **dadurch gekennzeichnet,** daß die Plasmaentladung unter Gleichstrom erfolgt.

14. Verfahren nach Anspruch 12 oder 13, **dadurch gekennzeichnet,** daß die Plasmaentladung im elektromagnetischen Wechselfeld erfolgt.

15. Verfahren nach einem der Ansprüche 12 bis 14, **dadurch gekennzeichnet,** daß die Plasmaentladung bei einer Stromstärke von 5 - 500 mA erfolgt und bei einer Spannung im Bereich von 100 - 1000 Volt durchgeführt wird.

16. Verfahren nach einem der Ansprüche 12 bis 15, **dadurch gekennzeichnet**, daß die Plasmapolymerisation bei einem Vakuum von 13,3 - 0,13 Pa ($10^{-1}$ bis $10^{-3}$ Torr) erfolgt.

17. Verwendung eines Siliconkautschukkörpers erhältlich nach einem der Ansprüche 1 bis 16, als optische

Linse.

**18.** Verwendung eines Siliconkautschukkörpers erhältlich nach einem der Ansprüche 1 bis 16, als Kontaktlinse.

**19.** Verwendung eines Siliconkautschukkörpers erhältlich nach einem der Ansprüche 1 bis 16 als intraokulare Linse.

## Claims

**1.** A process for hydrophilising a moulded silicone rubber article at its surface, in which the silicone rubber at the surface of the moulded article is reacted with organosiloxanes (equilibration reaction), wherein the organosiloxanes used in the reaction have been synthesised by reacting SiH-group-containing siloxanes with allyl compounds having protected OH groups, the reaction product then optionally being hydrolysed.

**2.** A process according to claim 1, wherein the organosiloxanes are one or more of the following compounds: $\alpha,\omega$-organodimethylsiloxanes, linear trimethylsilyl-terminated organomethylsiloxanes, cyclic organomethylsiloxanes and cyclic diorganosiloxanes.

**3.** A process according to claim 2, wherein the linear $\alpha,\omega$-organodimethylsiloxanes are one or more of the following compounds: 1,3-bis(3-trimethylsilyloxypropyl)-1,1,3,3-tetramethyldisiloxane, 1,3-bis(3-hydroxypropyl)-1,1,3,3-tetramethyldisiloxane, 3,5-bis(3-trimethylsilyloxypropyl)-1,1,1,3,5,7,7,7-octamethyltetrasiloxane,3,5-bis(3-hydroxypropyl)-1,1,1,3,5,7,7,7-octamethyltetrasiloxane, 1,3-bis(6,7-epoxy-4-oxaheptyl)-1,1,3,3-tetramethyldisiloxane, 1,3-bis(6,7-dihydroxy-4-oxaheptyl)-1,1,3,3-tetramethyldisiloxane.

**4.** A process according to claim 2, wherein the linear trimethylsilyl-terminated organomethylsiloxanes are addition products of the general formula

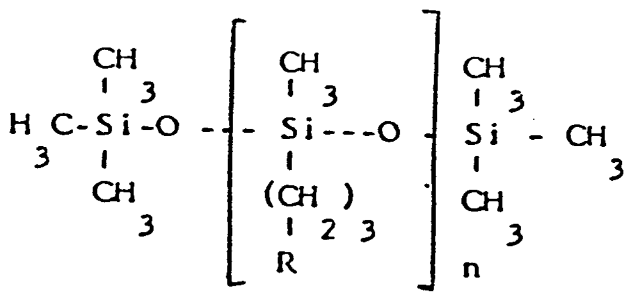

wherein R is $-O-Si(CH_3)_3$ or

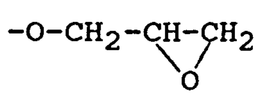

obtained from allyloxytrimethylsilane or allyl glycidyl ether and polymethylhydrogensiloxanes of different chain length and having the general formula

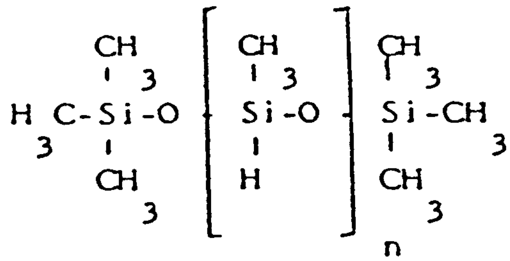

wherein n = 2 or from 10 to 50, or are hydrolysis products thereof wherein R is -OH or -O-$CH_2$-CH-(OH)-$CH_2$-OH.

5. A process according to claim 2, wherein the cyclic organomethylsiloxanes and cyclic diorganosiloxanes are one or more of the following compounds: 2,4,6,8-tetrakis-(3-trimethylsilyloxypropyl)-2,4,6,8-tetramethylcyclotetrasiloxane, 2,4,6,8-tetrakis(6,7-epoxy-4-oxaheptyl)-2,4,6,8-tetramethylcyclotetrasiloxane, 2,4,6,8-tetrakis-(3-acetoxypropyl)-2,4,6,8-tetramethylcyclotetrasiloxane, 2,4,6,8-tetrakis(3-hydroxypropyl)-2,4,6,8-tetramethylcyclotetrasiloxane, 2,4,6,8-tetrakis(6,7-dihydroxy-4-oxaheptyl)-2,4,6,8-tetramethylcyclotetrasiloxane, 2,2,4,4,6,6,8,8-octakis(3-acetoxypropyl)-cyclotetrasiloxane and 2,2,4,4,6,6,8,8-octakis(3-hydroxypropyl)-cyclotetrasiloxane.

6. A process according to any one of claims 1 to 5, wherein the equilibration reaction is carried out in the presence of a catalyst.

7. A process according to claim 6, wherein a Lewis acid or concentrated sulfuric acid is used as equilibration catalyst.

8. A process according to claim 7, wherein hexachlorocyclotriphosphazene is used as Lewis acid.

9. A process according to any one of claims 6 to 8, wherein the equilibration reaction is carried out in an ether as solvent.

10. A process according to claim 1, wherein the SiH-group-containing siloxanes are reacted with the allyl compounds in the presence of hexachloroplatinic acid as catalyst.

11. A process according to any one of claims 1 to 10, wherein polydimethylsiloxane is used as the silicone rubber.

12. A process according to any one of claims 1 to 11, wherein the surface is subsequently treated by plasma polymerisation carried out by plasma discharge in an atmosphere which contains the compounds present in the equilibration reaction.

13. A process according to claim 12, wherein the plasma discharge takes place under direct current.

14. A process according to either claim 12 or claim 13, wherein the plasma discharge takes place in an alternating electromagnetic field.

15. A process according to any one of claims 12 to 14, wherein the plasma discharge takes place at an current of from 5 to 500 mA and at a voltage in the range of from 100 to 1000 volts.

16. A process according to any one of claims 12 to 15, wherein the plasma polymerisation is carried out in a vacuum of 13.3 - 0.13 Pa ($10^{-1}$ to $10^{-3}$ torr).

17. The use of a silicone rubber article obtainable according to any one of claims 1 to 16 as an optical lens.

18. The use of a silicone rubber article obtainable according to any one of claims 1 to 16 as a contact lens.

19. The use of a silicone rubber article obtainable according to any one of claims 1 to 16 as an intraocular lens.

**Revendications**

1. Procédé pour l'hydrophilisation d'un objet conformé en caoutchouc de silicone sur sa surface, dans lequel on fait réagir le caoutchouc de silicone à la surface de l'objet conformé avec des organosiloxanes (réaction d'équilibrage), caractérisé en ce qu'on utilise pour la réaction des organosiloxanes qui sont préparés par réaction de siloxanes contenant des groupes Si-H avec des composés allyliques contenant des groupes OH protégés, tandis qu'on hydrolyse ensuite éventuellement le produit de réaction.

2. Procédé selon la réaction 1, caractérisé en ce que les organosiloxanes sont l'un ou plusieurs des composés suivants: α,ω-organodiméthylsiloxanes linéaires, organométhylsiloxanes linéaires à terminaison triméthylsilyle et organométhylsiloxanes cycliques et diorganosiloxanes cycliques.

3. Procédé selon la revendication 2, caractérisé en ce que les α,ω-organodiméthylsiloxanes linéaires sont l'un ou plusieurs des composés suivants: 1,3-bis-(3-triméthylsilyloxypropyl)-1,1,3,3-tétraméthyldisiloxane, 1,3-bis(3-hydroxypropyl)-1,1,3,3-tétraméthyldisiloxane, 3,5-bis(3-triméthylsilyloxypropy1)-1,1,1,3,5,7,7,7-octaméthyltétrasiloxane, 3,5-bis(3-hydroxypropyl)-1,1,1,3,5, 7,7,7-octaméthyltétrasiloxane, 1,3-bis(6,7-époxy-4-oxaheptyl)-1,1,3,3-tétraméthyldisiloxane, 1,3-bis(6,7-dihydroxy-4-oxaheptyl)-1,1,3,3-tétraméthyldisiloxane.

4. Procédé selon la revendication 2, caractérisé en ce que les organométhylsiloxanes linéaires à terminaison triméthylsilyle sont des produits d'addition ayant la formule générale

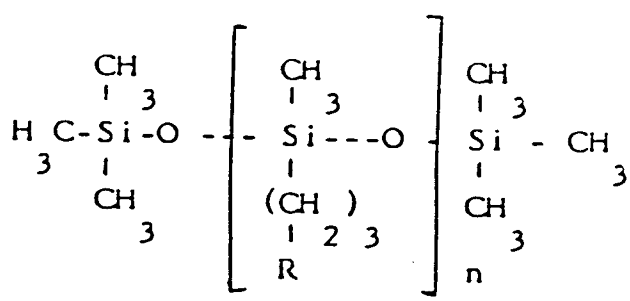

R: $-O-Si(CH_3)_3$ ;

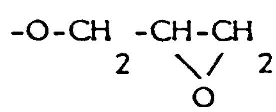

d'allyloxytriméthylsilane ou d'éther d'allyle et de glycidyle avec des polyméthylhydrogénosiloxanes de différentes longueurs de chaînes ayant la formule générale

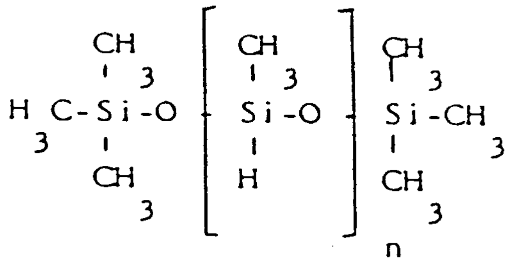

tandis que n = 2, 10 - 50 ou leurs produits d'hydrolyse avec R: -OH; $-O-CH_2-CH(OH)-CH_2-OH$.

**5.** Procédé selon la revendication 2, caractérisé en ce que les organométhylsiloxanes cycliques ou les diorganosiloxanes cycliques sont l'un ou plusieurs des composés suivants: 2,4,6,8-tétrakis(3-triméthylsilyloxypropyl)-2,4,6,8-tétraméthylcyclotétrasiloxane, 2,4,6,8-tétrakis(6,7-époxy-4-oxaheptyl)-2,4,6,8-tétraméthylcyclotétrasiloxane, 2,4,6,8-tétrakis(3-acétoxypropyl)-2,4,6,8-tétraméthylcyclotétrasiloxane, 2,4,6,8-tétrakis(3-hydroxypropyl)-2,4,6,8-tétraméthylcyclotétrasiloxane, 2,4,6,8-tétrakis-(6,7-dihydroxy-4-oxaheptyl)-2,4,6,8-tétraméthylcyclo tétrasiloxane, 2,2,4,4,6,6,8,8-octakis(3-acétoxypropyl)-cyclotétrasiloxaneet 2,2,4,4,6,6,8,8-octakis(3-hydroxypropyl)cyclotétrasiloxane.

**6.** Procédé selon l'une quelconque des revendications 1 à 5, caractérisé en ce qu'on effectue la réaction d' équilibrage en présence d'un catalyseur.

**7.** Procédé selon la revendication 6, caractérisé en ce qu'on utilise comme catalyseur d'équilibrage un acide de Lewis ou de l'acide sulfurique concentré.

**8.** Procédé selon la revendication 7, caractérisé en ce qu'on utilise comme acide de Lewis de l'hexachlorocyclotriphosphazène.

**9.** Procédé selon l'une quelconque des revendications 6 à 8, caractérisé en ce qu'on effectue la réaction d' équilibrage dans un éther comme solvant.

**10.** Procédé selon la revendication 1, caractérisé en ce qu'on fait réagir les siloxanes contenant des groupes Si-H avec les composés allyliques en présence de $H_2PtCl_6$ en tant que catalyseur.

**11.** Procédé selon l'une quelconque des revendications 1 à 10, caractérisé en ce qu'on utilise comme caoutchouc de silicone du polydiméthylsiloxane.

**12.** Procédé selon l'une quelconque des revendications 1 à 11? caractérisé en ce qu'on effectue un traitement superficiel subséquent par polymérisation au plasma au moyen d'une décharge de plasma dans une atmosphère qui comprend les composés présents pour la réaction d' équilibrage.

**13.** Procédé selon la revendication 12, caractérisé en ce la décharge de plasma s'effectue sous courant continu.

**14.** Procédé selon l'une des revendications 12 ou 13, caractérisé en ce que la décharge de plasma s'effectue dans le champ alternatif électromagnétique.

**15.** Procédé selon l'une quelconque des revendications 12 à 14, caractérisé en ce qu'on effectue la décharge de plasma sous une intensité de courant de 5 à 500 mA et sous une tension comprise entre 100 et 1000 volt.

**16.** Procédé selon l'une quelconque des revendications 12 à 15, caractérisé en ce qu'on effectue la polymérisation au plasma sous un vide de 13,3 - 0,13 Pa ($10^{-1}$ à $10^{-3}$ Torr).

**17.** Utilisation d'un objet en caoutchouc de silicone qui peut être obtenu selon l'une quelconque des revendications 1 à 16 comme lentille optique.

**18.** Utilisation d'un objet en caoutchouc de silicone qui peut être obtenu selon l'une quelconque des revendications 1 à 16 comme lentille de contact.

**19.** Utilisation d'un abjet en caoutchouc de silicone qui peut être obtenu selon l'une quelconque des revendications 1 à 16 comme lentille intraoculaire.